(19) Europäisches Patentamt
European Patent Office
Office européen des brevets

(11) **EP 3 691 929 B1**

(12) **FASCICULE DE BREVET EUROPEEN**

(45) Date de publication et mention de la délivrance du brevet:
**01.11.2023 Bulletin 2023/44**

(21) Numéro de dépôt: **18792431.1**

(22) Date de dépôt: **27.09.2018**

(51) Classification Internationale des Brevets (IPC):
**B60L 5/08** *(2006.01)*        **B60L 5/20** *(2006.01)*

(52) Classification Coopérative des Brevets (CPC):
**B60L 5/08; B60L 5/205;** B60L 2200/26

(86) Numéro de dépôt international:
**PCT/FR2018/052378**

(87) Numéro de publication internationale:
**WO 2019/068990 (11.04.2019 Gazette 2019/15)**

(54) **SYSTÈME COMPRENNANT UNE BANDE DE FROTTEMENT ET UN CIRCUIT DE DETECTION D'UN PANTOGRAPHE POUR VEHICULE FERROVIAIRE, PROCÉDÉ DE SURVEILLANCE D'UNE TELLE BANDE, ET VÉHICULE FERROVIAIRE**

SYSTEM MIT KONTAKTLEISTE UND DETEKTIONSSCHALTUNG EINES SCHERENSTROMABNEHMERS FÜR EIN SCHIENENFAHRZEUG, VERFAHREN ZUR ÜBERWACHUNG EINER SOLCHEN LEISTE, UND SCHIENENFAHRZEUG

SYSTEM COMPRISING CONTACT STRIP AND DETECTION CIRCUIT OF A PANTOGRAPH FOR A RAIL VEHICLE, METHOD FOR MONITORING SUCH A STRIP, AND RAIL VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2017 FR 1759230**
**03.10.2017 FR 1759231**
**15.02.2018 FR 1851285**
**15.02.2018 FR 1851284**

(43) Date de publication de la demande:
**12.08.2020 Bulletin 2020/33**

(73) Titulaire: **Faiveley Transport Tours**
**37701 Saint Pierre des Corps Cedex (FR)**

(72) Inventeurs:
• **AUBIN, Philippe**
**37390 Chanceaux Sur Choisille (FR)**
• **LAMIDE, Fabrice**
**37270 Montlouis Sur Loire (FR)**

(74) Mandataire: **Schmidt, Martin Peter**
**IXAS Conseil**
**22 avenue René Cassin**
**69009 Lyon (FR)**

(56) Documents cités:
WO-A1-2017/001799          WO-A1-2017/001799
DE-A1-102015 117 075      DE-U1- 8 803 377
DE-U1- 8 803 377            FR-A1- 3 080 577
JP-A- S5 372 676            JP-A- H03 178 501
JP-A- H07 172 221          JP-A- S59 204 401

## Description

### Domaine technique de l'invention

L'invention concerne le domaine de l'électrotechnique pour application ferroviaire, et plus particulièrement celui des pantographes. Plus précisément, elle concerne une bande de frottement pour pantographes, utilisée pour transférer l'énergie électrique entre un moyen fixe de distribution d'énergie, tel qu'une caténaire, et un appareil mobile consommateur d'énergie électrique, tel qu'un engin de traction de train, de métro, de tramway, qui est muni d'une telle bande de frottement. Cette bande de frottement comprend un dispositif de détection d'usure.

### Etat de la technique

Pour un véhicule ferroviaire muni d'un moteur de traction électrique, les pantographes assurent le contact électrique entre l'unité de traction (par exemple la locomotive) et la caténaire. Plus précisément, le pantographe comprend une pièce de frottement qui entre en contact mécanique frottant avec la caténaire. La pièce de frottement est une bande disposée horizontalement et sensiblement perpendiculaire à la caténaire. Cette pièce appelée aussi « bande de frottement » comprend une bande d'usure fixée sur un étrier ; la bande d'usure est un conducteur électrique qui collecte et transmet le courant électrique de la caténaire au pantographe pour alimenter le système de traction électrique, par l'intermédiaire de l'étrier, un support métallique qui sert comme embase pour la bande d'usure.

Afin d'assurer un contact électrique stable, le pantographe exerce contre la caténaire une force de pression. Cette force n'est pas constante mais peut dépendre, d'une part, du développement du pantographe (qui dépend de la hauteur de la caténaire par rapport à la voie ferroviaire), et, d'autre part, des effets aérodynamiques, ces derniers étant fonction du développement du pantographe, de la vitesse d'avancement du véhicule ferroviaire, et de la vitesse et direction du vent.

La bande d'usure est réalisée en un matériau conducteur électrique moins dur que la caténaire, afin d'éviter l'usure précoce de la caténaire ; ce matériau est typiquement un mélange à forte contenance de carbone. C'est donc la bande d'usure qui s'use de manière prépondérante : la bande de frottement est une pièce consommable qu'il faut remplacer régulièrement, sachant qu'il n'est normalement pas prévu de remplacer uniquement la bande d'usure. En cas de rupture de la bande d'usure, le contact électrique entre la caténaire et le pantographe peut s'interrompre : cela perturbe l'alimentation électrique du train, pouvant conduire à l'arrêt du train en rase campagne. La rupture de la bande d'usure peut conduire à la montée incontrôlée du pantographe, qui continuera à exercer une force contre la caténaire pendant l'avancement du train : ainsi la rupture de la bande d'usure peut provoquer l'endommagement de la caténaire par le pantographe ou un arrachement de la tête du pantographe. Cela représente un incident lourd qui nécessite l'intervention d'une équipe de techniciens sur le lieu, avec interruption de la circulation ferroviaire pendant plusieurs heures, voire plusieurs jours.

L'usure de la bande d'usure n'est pas une simple fonction du nombre de kilomètres parcourus par le train : l'usure dépend de la force de pression de la bande de frottement contre la caténaire, de la vitesse du train, de la vitesse et direction du vent, des conditions météorologiques (pluie, neige givre, température), des arcs électriques qui peuvent se produire au cours du contact frottant entre la bande et la caténaire. Par ailleurs, une température excessive non seulement accélère l'usure de la bande, mais encore favorise le décollement de la zone de transition entre la bande d'usure et son substrat métallique (étrier).

Il existe des systèmes qui visent à détecter l'usure de la bande d'usure, pour permettre de la remplacer avant sa rupture. Typiquement cette détection doit se situer à un stade suffisamment précoce pour permettre au véhicule ferroviaire d'atteindre sa gare de destination, où le service technique peut ensuite procéder au remplacement de la bande de frottement. Même dans le cas où cet objectif n'est pas atteint, il serait déjà désirable que le dispositif de détection puisse empêcher le pantographe de monter en cas de rupture de la bande d'usure, pour éviter l'endommagement de la caténaire par le pantographe. Ces systèmes de détection sont de différentes natures.

De nombreux documents décrivent des systèmes dans lesquels la bande de frottement comprend une enceinte longitudinale étanche contenant un fluide, de sorte qu'en cas d'usure au-delà d'une certaine valeur, ou en cas de rupture de la bande d'usure, il y a perte d'étanchéité de ladite enceinte, entraînant la fuite ou un changement de pression dudit fluide. Cet évènement peut être détecté pour déclencher le retrait du pantographe.

Dans les brevets anglais GB 1 374 972 et GB 2 107 662 (Morganite Carbon) ladite enceinte est un tube en matériau plastique ou caoutchouc pouvant résister à la température de fonctionnement qui peut atteindre 200 °C. Dans FR 2 663 592 (Le Carbone Lorraine) l'enceinte est un tube en matériau carboné présentant les mêmes caractéristiques mécaniques que la bande d'usure. Dans US 5,189,903 (Hoffmann & Co), EP 0 402 666 A1 (Ringsdorff-Werke), et dans EP 0 394 972 A2 et EP 1 384 972 (Schunk Bahntechnik) l'enceinte est formée au moins en partie par les parois d'une rainure aménagée dans la partie inférieure de la bande de frottement. EP 0 872 374 A1 (Le Carbone-Lorraine) propose d'utiliser un tube étanche en aluminium ou cuivre, d'une dureté inférieure à 4 sur l'échelle de Mohs. Un autre dispositif utilisant un tube en laiton entaillé est décrit dans WO 2014/102508 (Mersen France Amiens).

Ces dispositifs présentent certains inconvénients. Ils doivent être reliés à un circuit de fluide, par exemple d'air comprimé, ce qui alourdit à la fois le dispositif et sa maintenance. Ils ne permettent qu'un seul niveau de détection (intégrité de l'enceinte ou fuite de fluide), ce qui ne permet une maintenance prévisionnelle que lorsque le seuil d'usure de la bande de frottement qui déclenche la perte de fluide a été effectivement atteint.

Le principal inconvénient de ces systèmes automatiques d'abaissement d'urgence (connus sous le signe ADD = Automatic Drop Device) qui mettent en oeuvre la détection pneumatique associée à un système de rétraction automatique est qu'ils entrainent une descente automatique du bras du pantographe afin d'éviter des dommages importants du matériel roulant et/ou de l'infrastructure; cela perturbe l'alimentation du véhicule ferroviaire et impacte la disponibilité du train.

D'autre part comme ces systèmes font appel à un circuit d'air comprimé dont les véhicules légers de type tramway ne sont pas équipés, cette solution ne peut s'appliquer tous les segments du secteur ferroviaire.

EP 0 525 595 A1 (Siemens AG) décrit une bande de frottement dans laquelle ont été noyées des fibres optiques à une profondeur différente. Au fur et à mesure que l'épaisseur de la bande d'usure diminue par l'usure, les fibres optiques sont endommagées. Par des moyens optiques on peut ainsi en déduire autant de niveaux d'usure de la bande de frottement qu'il y a de fibres optiques à une profondeur différente. Cela donne une certaine idée de l'épaisseur de bande de frottement restante, mais cette solution est techniquement assez compliquée, à la fois pour la fabrication de la bande de frottement et pour le système de détection optique. WO 2006/065 985 (Pantrac GmbH) propose de percer des trous borgnes sur la partie inférieure de la bande d'usure ; l'usure de ces trous peut être relevée par une fibre optique noyée dans le trou. L'utilisation de trous d'une profondeur différente peut permettre de détecter plusieurs niveaux d'usure, mais ce dispositif optique est complexe et ne permet une surveillance que dans des zones discrètes de la bande.

On citera en outre WO 2005/044614, qui décrit l'utilisation de fibres dans l'étrier de la bande de frottement, de manière à déterminer la pression exercée par la caténaire sur la tête du pantographe. Ce dispositif est couplé à une géolocalisation, afin de donner une image représentative de l'état du réseau, en particulier du réglage de la tension de la caténaire. Cette solution n'est cependant pas économiquement viable, ce qui rend délicate son utilisation en service commercial. JPH08107603 (A) décrit une solution très rudimentaire, dans laquelle on donne une forme particulière au pantographe, de manière à permettre une observation du niveau d'usure de la bande. Ce système ne permet pas de surveiller la bande en mode dynamique, à savoir en service normal du véhicule. En pratique, l'enseignement de ces deux derniers documents ne permet donc pas de remédier aux problèmes présentés ci-dessus.

On connaît en outre, par WO 2017 001799, un dispositif de surveillance de l'usure d'une bande de frottement qui fait appel à des capteurs ponctuels, à savoir qui s'étendent sur une faible portion de la longueur de la bande. En service, ces capteurs ponctuels sont destinés à identifier des instants de passage de la caténaire. Cet agencement permet, en particulier, de corréler l'usure de la bande et la distance parcourue par le véhicule. Cette solution présente cependant certains inconvénients, tout d'abord liés à la complexité mécanique de ce système de surveillance. Par ailleurs, le bon fonctionnement de ce système est tributaire d'un positionnement régulier de la caténaire le long de la voie, ce qui n'est généralement pas le cas en pratique.

Enfin on citera le document DE 88 03 377, qui divulgue une bande de frottement dans laquelle sont noyés des éléments conducteurs. Ce document enseigne que ces éléments conducteurs sont susceptibles de transmettre une alerte, en direction de capteurs de nature optique ou acoustique. Ce document ne délivre cependant aucune information, quant à une mise en pratique exploitable pour l'homme du métier.

D'une manière générale, le pantographe d'un engin de traction ferroviaire, et surtout dans le cas d'un train à grande vitesse, représente un environnement très perturbé sur le plan mécanique (vitesse, vent, vibration, gel), thermique (températures d'été et d'hiver, température augmentée dû au frottement) électrique (haute tension, fort courant, arc électrique, humidité, neige) et électronique (champ électromagnétiques, machines électriques tournantes, transformateurs, rupteurs) : ce n'est pas un environnement propice pour installer des dispositifs métrologiques de précision. Par ailleurs, ce n'est pas un environnement spécialement accessible pour la maintenance : Toute intervention humaine sur le pantographe doit suivre des procédures rigoureuses pour ne pas mettre en danger le personnel ; le respect de ces procédures rallonge la durée de l'intervention.

Il existe manifestement un besoin pour un dispositif de surveillance de l'usure de la bande de frottement qui soit simple et robuste et qui permette une surveillance continue et en temps réel sans impacter la disponibilité de l'équipement, et qui puisse être utilisé également sur des véhicules légers de type tramway, non équipés de circuit à air comprimé.

## Objets de l'invention

Le périmètre de l'invention est défini par l'ensemble des revendications annexées.

Selon l'invention, le problème est résolu par un système de surveillance de l'usure de la bande de frottement d'un pantographe d'un véhicule, notamment d'un véhicule ferroviaire, qui comporte une bande de frottement comprenant des moyens de fixation sur ledit pantographe, notamment un étrier, ainsi qu'une région active ou bande d'usure destinée à entrer en contact avec une caténaire, cette bande d'usure étant réalisée un premier matériau électriquement conducteur, ladite bande de frottement comprenant des moyens de contact, propres à venir en contact avec la caténaire lors d'une diminution d'épaisseur de ladite bande d'usure, ladite bande de frottement étant caractérisée en ce que les moyens de contact comprennent au moins un élément de contact électriquement conducteur, réalisé en un deuxième matériau électriquement conducteur dont la conductivité électrique est supérieure à celle dudit premier matériau électriquement conducteur, et en ce que la bande de frottement comprend en outre des moyens d'isolation électrique entre ledit élément électriquement conducteur et la bande d'usure, et des moyens de connexion dudit élément de contact à au moins un circuit de détection, intégrant ledit élément électriquement conducteur.

Ce système représente un premier objet de la présente invention. La surface supérieure dudit élément électriquement conducteur de ladite bande de frottement est située à une profondeur prédéterminée, par rapport à la surface supérieure de ladite bande d'usure, à l'état non usé de cette dernière. Cette profondeur diminue au fur et à mesure que la bande d'usure est usée par le contact frottant avec la caténaire. Dans un mode de réalisation, ledit élément électriquement conducteur est allongé et s'étend transversalement à l'intérieur de la bande d'usure, en référence à la direction d'avancée du véhicule.

Lesdits moyens d'isolation électrique peuvent comprendre une gaine électriquement isolante qui s'étend dans la bande d'usure, ledit élément électriquement conducteur étant logé dans ladite gaine. Les moyens d'isolation électrique isolent ledit élément électriquement conducteur par rapport à la bande d'usure. Avantageusement on prévoit également des moyens d'isolation électrique (qui peuvent être les mêmes que ceux qui viennent d'être énoncés, ou qui peuvent être différents) capables d'isoler ledit élément électriquement conducteur par rapport à l'étrier.

Dans une variante, la bande de frottement comporte deux éléments électriquement conducteurs, un premier élément électriquement conducteur étant tourné vers la caténaire en fonctionnement normal du véhicule de manière à fournir un premier degré d'alerte, alors que le deuxième élément électriquement conducteur est opposé à la caténaire en fonctionnement normal du véhicule de manière à fournir un deuxième degré d'alerte. On peut augmenter le nombre d'éléments électriquement conducteurs à trois, quatre ou plus.

Selon une caractéristique avantageuse de l'invention, le premier élément conducteur est logé dans un premier insert, reçu dans une première gorge de ladite bande d'usure, alors que le second élément conducteur est logé dans un second insert, reçu dans une seconde gorge de ladite bande d'usure.

Avantageusement, l'élément électriquement conducteur (ou en cas de pluralité d'éléments conducteurs : chaque élément électriquement conducteur) est réalisé en cuivre.

Dans la bande de frottement selon l'invention, les moyens de connexion comprennent deux connecteurs électriques, prévus aux deux extrémités longitudinales dudit élément électriquement conducteur.

Dans une variante avantageuse, les moyens de connexion amovible comprennent un unique connecteur électrique, le ou chaque élément électriquement conducteur formant une boucle dont les deux extrémités coopèrent avec ledit connecteur électrique unique. En particulier, il peut être prévu une unique gaine et les deux extrémités du ou de chaque élément électriquement conducteur coopèrent alors avec ladite gaine unique.

La bande de frottement de l'invention est, de manière préférée, dépourvue de moyens de détection pneumatique, adaptés pour contenir un fluide sous pression.

Un autre objet de l'invention est un véhicule ferroviaire comprenant une caisse et un pantographe, ledit pantographe comportant un châssis monté sur ladite caisse dudit véhicule, une bande de frottement destiné à entrer en contact avec une caténaire et des moyens de liaison entre le châssis et la bande de frottement, caractérisé en ce que la bande de frottement est conforme à l'objet de l'invention, et le véhicule comprend en outre un circuit de détection, intégrant ledit au moins un élément électriquement conducteur, ainsi que des moyens de détection, propres à détecter la variation d'un paramètre représentatif dudit circuit de détection.

Ledit véhicule comprend avantageusement des moyens d'alerte aptes à être activés lorsque ladite variation se situe en dehors d'une plage prédéterminée de réponses, notamment en cas de coupure électrique dudit circuit de détection.

Il comprend en outre des moyens de retrait dudit pantographe, propres à retirer le pantographe de la caténaire, en réponse aux moyens d'alerte.

Dans un mode de réalisation tout particulièrement avantageux de l'invention, le véhicule comprend en outre un module de contrôle/commande intégrant les moyens de détection et les moyens d'alerte, ce module étant apte à coopérer avec ledit circuit de détection électrique. Ce module de contrôle/commande peut comprendre des moyens de communication de type sans fil, propres à transmettre des informations en direction dudit véhicule ferroviaire et/ou du sol. Le module de contrôle/commande est par exemple fixé, notamment de manière amovible, sur la tête du pantographe.

Dans un autre mode de réalisation de l'invention, ces moyens de détection sont propres à identifier la variation de l'inductance dudit circuit de détection. Par exemple, ledit circuit de détection comprend au moins un circuit primaire destiné à être monté sur la caisse du véhicule, au moins un circuit secondaire de type RLC (comprenant une résistance (R), une capacité (C) et une inductance (L)) destiné à être monté sur le pantographe ; ledit circuit primaire comprend des moyens de mise en interaction fonctionnelle (tel qu'une excitation électromagnétique) dudit circuit secondaire, ledit circuit secondaire comprenant ledit au moins un élément électriquement conducteur, ainsi que des moyens de connexion électrique, propres à relier ledit au moins un élément électriquement conducteur aux moyens de mise en interaction fonctionnelle.

Lesdits moyens de mise en interaction fonctionnelle entre ledit circuit primaire et ledit circuit secondaire comprennent avantageusement une inductance dite primaire appartenant au circuit primaire, et une inductance dite secondaire appartenant au circuit secondaire.

Dans un mode de réalisation, un premier circuit secondaire comprend ledit premier élément de détection, des premiers moyens de mise en interaction fonctionnelle, et des premiers moyens de connexion électrique, alors qu'un deuxième circuit secondaire comprend ledit deuxième élément de détection, des deuxièmes moyens de mise en interaction fonctionnelle, et des deuxièmes moyens de connexion électrique.

Typiquement, le circuit primaire est monté sur la caisse du véhicule et le circuit secondaire est monté sur le pantographe.

Un tel système de surveillance de l'usure d'une bande de frottement, montée sur un véhicule, représente un autre objet de l'invention.

Encore un autre objet de l'invention est un procédé de mise en oeuvre d'un système de surveillance selon l'invention, dans lequel on excite le circuit secondaire au moyen du circuit primaire, on contrôle la variation dudit au moins un paramètre représentatif dudit circuit secondaire à ladite excitation, puis on détecte ladite au moins une occurrence. De manière avantageuse on excite le circuit secondaire à une fréquence voisine de la fréquence de résonance dudit circuit secondaire

Un autre objet de l'invention est un procédé de surveillance de l'usure d'une bande de frottement selon l'invention, montée sur un véhicule selon l'invention, dans lequel procédé on détecte au moins une occurrence, pour laquelle ladite la variation du paramètre représentatif dudit circuit de détection se situe en dehors d'une plage prédéterminée de variations, et on identifie au moins un type de dysfonctionnement de la bande de frottement, à partir de cette détection.

Dans un mode de réalisation particulier, un premier dysfonctionnement de la bande de frottement correspond à la mise en contact de la caténaire avec au moins un élément de détection. Ayant identifié une mise en contact de la caténaire avec ledit élément électriquement conducteur supérieur, on peut soit retirer le pantographe de la caténaire de manière à provoquer l'arrêt du véhicule, soit renoncer à retirer le pantographe de la caténaire, de manière à autoriser la poursuite de l'avancement du véhicule.

Un autre objet de l'invention est un système de surveillance de l'usure de la bande d'usure de la bande de frottement d'un pantographe d'un véhicule, dans lequel le pantographe comporte un châssis, un archet et des moyens de liaison, notamment d'articulation, entre le châssis et l'archet, ledit châssis étant monté sur une caisse dudit véhicule, et ledit archet comprend une bande de frottement comportant une bande d'usure destinée à entrer en contact avec une caténaire ; ledit système comprend au moins un circuit primaire destiné à être monté sur la caisse du véhicule, et au moins un circuit secondaire de type RLC destiné à être monté sur le pantographe ; ledit circuit primaire comprend des moyens de mise en interaction fonctionnelle dudit circuit secondaire, et ledit circuit secondaire comprend ladite bande de frottement, ainsi que des moyens de connexion électrique, propres à relier ladite bande aux moyens de mise en interaction fonctionnelle ; et ledit système comprenant en outre des moyens de contrôle de la réponse instantanée dudit circuit secondaire à ladite mise en interaction fonctionnelle.

Selon un mode de réalisation, ladite mise en interaction fonctionnelle est une excitation inductive. Lesdits moyens de mise en interaction fonctionnelle entre ledit circuit primaire et ledit circuit secondaire peuvent comprendre une inductance dite primaire appartenant au circuit primaire, et une inductance dite secondaire appartenant au circuit secondaire.

Ledit système peut comprendre en outre des moyens d'alerte qui seront activés lorsque ladite réponse instantanée se situe en dehors d'une plage prédéterminée de réponses. Ladite plage prédéterminée de réponses peut comprendre la présence d'un signal d'une certaine intensité. Dans ce cas lesdits moyens d'alerte seront activés lorsque l'intensité dudit signal devient inférieure à une valeur prédéterminée, ou disparaît complètement.

Ledit circuit secondaire comprend des moyens de connexion électrique, notamment de type filaire, aptes à connecter ledit insert et les moyens de mise en interaction fonctionnelle.

Selon un mode de réalisation le système de surveillance selon l'invention est caractérisé en ce que le ou chaque circuit secondaire comprend au moins un insert, monté dans la bande de frottement, ledit insert étant réalisé en un matériau présentant une meilleure conductivité électrique que le matériau de la bande d'usure, ledit insert étant placé à distance de la caténaire en fonctionnement normal du véhicule, et ledit insert étant électriquement isolé par rapport au matériau de la bande d'usure.

Dans une variante de ce mode de réalisation on prévoit deux inserts, chaque insert appartenant à un circuit secondaire respectif, un premier insert étant tourné vers la caténaire en fonctionnement normal du véhicule de manière à fournir un premier degré d'alerte, alors que le deuxième insert est opposé à la caténaire en fonctionnement normal du véhicule de manière à fournir un deuxième degré d'alerte. Le premier circuit secondaire comprend ledit premier insert, des premiers moyens de mise en interaction fonctionnelle, et des premiers moyens de connexion électrique, alors qu'un deuxième circuit secondaire comprend ledit deuxième insert, des deuxièmes moyens de mise en interaction fonctionnelle, et des deuxièmes moyens de connexion électrique.

Ces inserts peuvent être réalisés en cuivre.

Le système de surveillance selon l'invention peut comprendre en outre des moyens de retrait dudit pantographe, propres à retirer le pantographe de la caténaire, en réponse aux moyens d'alerte. Ces moyens peuvent être notamment de nature électrique (tel qu'un moteur électrique) ou de nature pneumatique.

Un autre objet de l'invention est un procédé de mise en oeuvre du système de surveillance selon l'invention, dans lequel on excite le circuit secondaire au moyen du circuit primaire, on contrôle la réponse instantanée dudit circuit secondaire à ladite excitation, on détecte au moins une occurrence, pour laquelle ladite réponse instantanée se situe en dehors d'une plage prédéterminée de réponses, et on identifie au moins un dysfonctionnement de la bande de frottement, à partir de cette détection. De manière avantageuse, on excite le circuit secondaire à une fréquence voisine de la fréquence de résonance dudit circuit secondaire.

Dans un premier mode de réalisation de ce procédé de mise en oeuvre, un premier dysfonctionnement de la bande de frottement peut correspondre à la mise en contact de la caténaire avec au moins un insert. Dans une variante de ce mode de réalisation de ce procédé de mise en oeuvre, on identifie la mise en contact de la caténaire avec ledit premier insert et on ne retire pas le pantographe de la caténaire, de manière à autoriser la poursuite de l'avancement du véhicule.

Dans un deuxième mode de réalisation de ce procédé de mise en oeuvre, le système de surveillance comprend deux inserts, chaque insert appartenant à un circuit secondaire respectif, et on identifie la mise en contact de la caténaire avec ledit deuxième insert et on retire le pantographe de la caténaire.

**Figures**

La figure 1 est une vue de profil d'un véhicule ferroviaire susceptible d'utiliser une bande de frottement selon l'invention.

La figure 2 est une vue de profil d'un pantographe du véhicule ferroviaire de la figure 1, susceptible d'utiliser une bande de frottement selon l'invention.

La figure 3(a) montre de manière schématique un dispositif capable de détecter un état particulier d'usure dans une bande de frottement selon l'invention.

La figure 3(b) montre de manière schématique un pantographe selon l'invention avec les systèmes qui constituent le circuit secondaire d'un circuit RLC.

La figure 4 montre de manière schématique une coupe transversale verticale à travers une bande de frottement selon un premier mode de réalisation de l'invention.

La figure 5 montre de manière schématique une coupe transversale verticale à travers une bande de frottement selon un deuxième mode de réalisation de l'invention.

La figure 6 montre de manière schématique une coupe longitudinale verticale à travers une bande de frottement selon le premier mode de réalisation de l'invention.

La figure 7 montre de manière schématique une coupe longitudinale verticale à travers une bande de frottement selon le deuxième mode de réalisation de l'invention.

La figure 8 montre la réponse d'un circuit RLC en fonction de la fréquence d'excitation.

La figure 9 montre de manière schématique l'évolution de l'intensité dans un circuit RLC en fonction de la fréquence d'excitation, pour différentes valeurs de résistance du circuit secondaire.

La figure 10 est une vue en coupe longitudinale, analogue à la figure 6, illustrant une bande de frottement conforme à une variante du premier mode de réalisation de l'invention.

La figure 11 est une vue en coupe longitudinale, analogue à la figure 7, illustrant une bande de frottement conforme à une variante du deuxième mode de réalisation de l'invention.

La figure 12 est une vue en coupe transversale, analogue aux figures 4 et 5, illustrant une variante de réalisation de la bande de frottement représentée à la figure 11.

La figure 13 est une vue de face, illustrant un pantographe équipé de deux bandes de frottement selon l'invention, ainsi que d'un module de contrôle/commande.

Les repères numériques suivants sont utilisés sur les figures :

| 100 | Véhicule | 400 | Bande de frottement |

(suite)

| 102 | Voie ferrée | 410 | Bande d'usure |
|---|---|---|---|
| 104 | Caténaire | 412 | Surface supérieure de 412 |
| 106 | Toit du véhicule 100 | 420 | Etrier (support métallique) |
| 108 | Pantographe | 430 | Matériau électriquement isolant |
| 202 | Châssis du pantographe 108 | 440 | Elément conducteur |
| 204 | Cadre du châssis 202 | 450 | Gaine de protection isolante |
| 206 | Isolateurs électriques | 460 | Connecteur |
| 208 | Archet | 300 | Circuit de détection |
| 210 | Bras articulé | 301 | Circuit primaire |
| 214 | Tige inférieure principale | 302 | Circuit secondaire |
| 216 | Tige supérieure principale | 303 | Couplage inductif |
| 218 | Tige inférieure auxiliaire | 104'-104''' | Positions de la caténaire |
| 220 | Tige supérieure auxiliaire | d,d1 | Distances entre 412 et 440 |
| 224 | Dispositif de compensation | W | Zone d'usure de 410 |
| 230 | Câblage de la boucle de 108 | 510 | Capacité de la boucle de 108 |
| 520 | Inductance du circuit secondaire | 530 | Inductance du circuit primaire |
| 440, 441 | Eléments conducteurs | X1, Y1 | Profondeurs de 440,441 |
| Z1,Z2 | Hauteurs de 412 | | |
| 1400 | Bande de frottement | 1440 | Conducteur |
| 1441 | Conducteur supplémentaire | 1440a | Extrémité de 1440 |
| 1440b | Extrémité de 1440 | 1441a | Extrémité de 1441 |
| 1441b | Extrémité de 1441 | 1450 | Gaine unique |
| 1460 | Connecteur unique | | |

## Description

Dans la présente description les termes « conducteur » et « isolant » se réfèrent à la conduction électrique, sauf mention contraire.

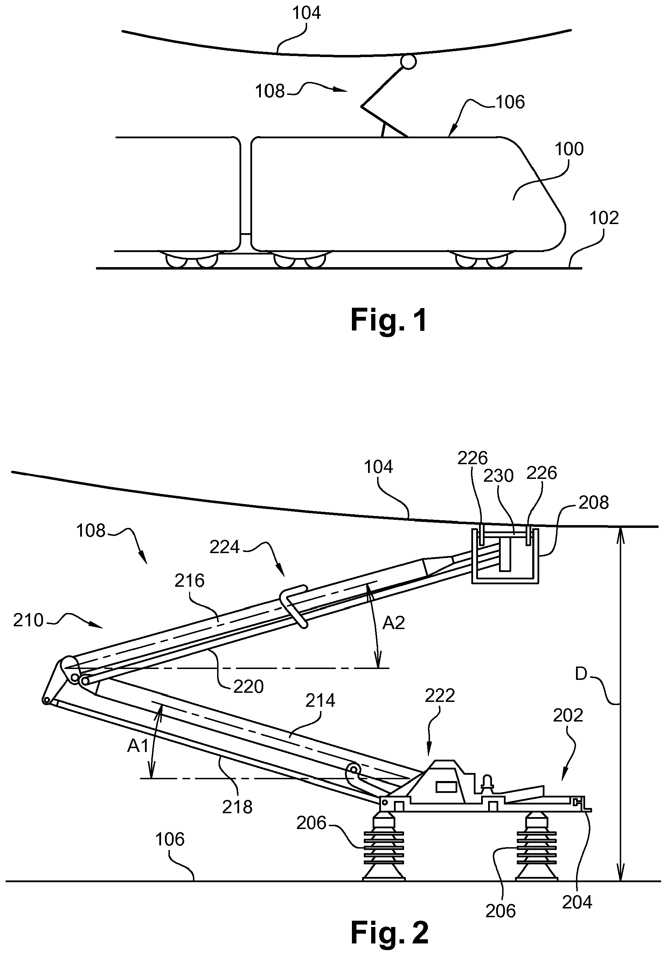

En référence à la figure 1, un véhicule ferroviaire **100** mettant en oeuvre l'invention va à présent être décrit. Le véhicule ferroviaire **100** est conçu pour circuler sur une voie ferroviaire **102** au-dessus de laquelle s'étend une caténaire **104** dans laquelle passe un courant électrique d'alimentation. Le véhicule ferroviaire **100** comporte un toit **106** sur lequel est fixé un pantographe **108** conçu pour capter le courant électrique d'alimentation de la caténaire **104** et ainsi alimenter électriquement le véhicule ferroviaire **100.**

En référence notamment à la figure 2, le pantographe **108** va à présent être décrit plus en détail. Ce pantographe représente un mode de réalisation typique selon l'état de la technique et ne comporte pas de système de surveillance de l'usure de la bande de frottement. Le pantographe **108** comporte un châssis **202** fixé au toit **106** du véhicule ferroviaire **100.** Dans l'exemple décrit, le châssis **202** comporte un cadre **204** et des isolateurs électriques **206** reliant le cadre **204** au toit **106** du véhicule ferroviaire **100.** Le pantographe **108** comporte en outre un archet **208** destiné à être au contact de la caténaire **104** afin de capter le courant d'alimentation.

L'archet **208** montré sur la figure 2 est un archet double : il porte à son sommet deux bandes de frottement **226** qui se trouvent en contact mécanique frottant avec la caténaire **104** lorsque le pantographe **108** est déployé; elles assurent le contact électrique dynamique entre la caténaire **104** et le pantographe **108.**

La caténaire **104** est située verticalement à une distance du châssis **202** qui peut fortement varier. Pour pallier les variations de la distance entre la caténaire **104** et le châssis **202,** le pantographe **108** comporte en outre un bras articulé **210** reliant l'archet **208** au châssis **202,** de sorte que l'archet **208** se trouve à une distance D variable du châssis **202.** Le bras articulé **210** est conçu pour se développer verticalement afin de déplacer l'archet **208** par rapport au châssis **202** dans le but de maintenir l'archet **208** au contact de la caténaire **104**. Ainsi, le bras articulé **210** est conçu pour, d'une part, se développer verticalement afin d'écarter l'archet **208** du châssis **202** lorsque la distance entre la caténaire **104** et le châssis **202** augmente et, d'autre part, se replier verticalement afin de rapprocher l'archet **208** du châssis **202** lorsque la distance entre la caténaire **104** et le châssis **202** diminue.

Dans l'exemple décrit, le bras articulé **210** est en deux parties et comporte une tige inférieure principale **214,** montée transversalement pivotante sur le châssis **202,** par exemple sur le cadre **204,** présentant un angle A1 avec la direction longitudinale, ainsi qu'une tige supérieure principale **216** montée transversalement pivotante sur la tige inférieure principale **214** et présentant un angle A2 avec la direction longitudinale. L'archet **208** est monté transversalement pivotant sur la tige supérieure principale **216.**

Le bras articulé **210** comporte en outre une tige inférieure auxiliaire **218** montée transversalement pivotante sur le châssis **202** (par exemple, sur le cadre **204**) et sur la tige supérieure principale **216,** de manière à asservir l'angle A2 de la tige supérieure principale **216** à l'angle A1 de la tige inférieure principale **214,** de sorte que l'augmentation de l'angle A1 entraîne l'augmentation de l'angle A2.

Le bras articulé **210** comporte en outre une tige supérieure auxiliaire **220** montée transversalement pivotante sur la tige inférieure principale **214** et sur l'archet **208,** de manière à ce que l'archet **208** garde un angle sensiblement constant avec la direction longitudinale L quel que soit le développement du bras articulé **210.**

Le pantographe **108** comporte en outre un dispositif de rappel **222** conçu pour inciter le bras articulé **210** à se développer. Ainsi, l'archet **208** est maintenu au contact de la caténaire **104**. Le dispositif de rappel **222** comporte par exemple un coussin d'air, un ressort ou bien un moteur électrique. Par ailleurs, le pantographe **108** comporte un dispositif de déploiement **224** permettant de déployer ou de retirer le pantographe selon le besoin de service du véhicule ferroviaire.

L'archet **208** montré sur la figure 2 est un archet double : il porte à son sommet deux bandes de frottement **226** qui se trouvent en contact mécanique frottant avec la caténaire **104** lorsque le pantographe **108** est déployé; elles assurent le contact électrique dynamique entre la caténaire **104** et le pantographe **108.**

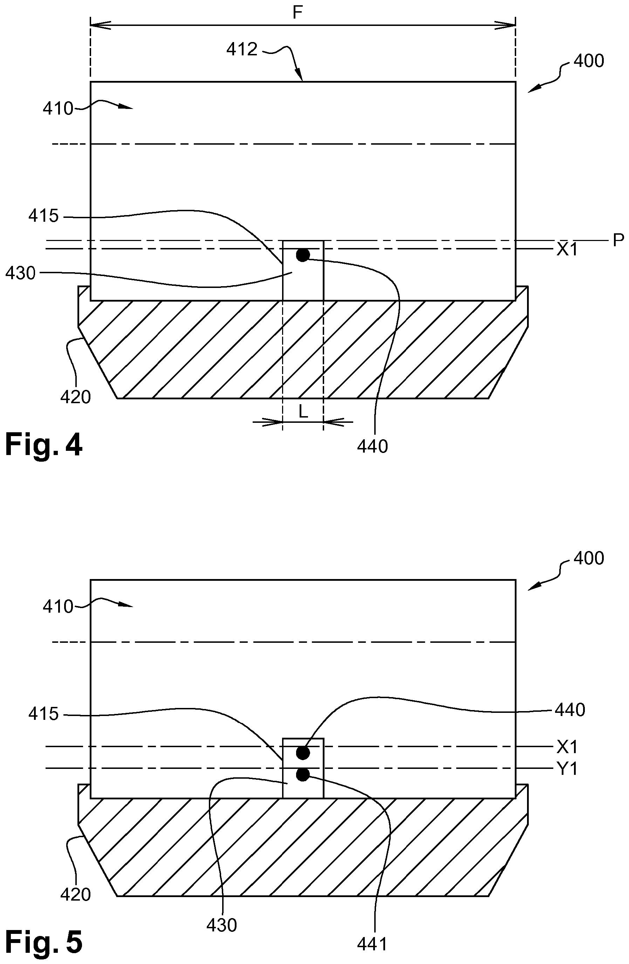

La présente invention concerne plus particulièrement la bande de frottement **400** montée sur l'archet. La structure de la bande de frottement selon l'invention sera maintenant expliquée en grand détail en relation avec les figures 4 à 7.

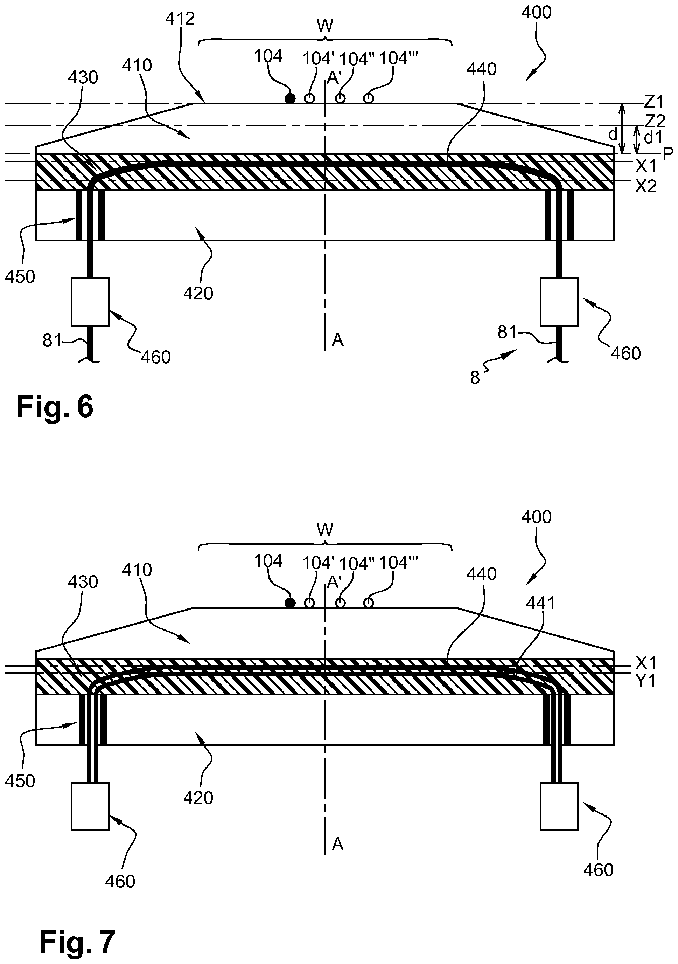

La figure 4 montre de manière schématique une coupe transversale verticale à travers une bande de frottement **400** selon un premier mode de réalisation de l'invention. La figure 6 montre la coupe longitudinale verticale correspondante ; la ligne A-A' indique la coupe représentée sur la figure 4. La bande de frottement **400** comprend un support métallique **420** appelé « étrier » qui forme une embase de fixation et qui s'étend sur toute la largeur. Typiquement cet étrier est un profilé extrudé en aluminium ou alliage d'aluminium. Sur cet étrier **420** est fixé la bande d'usure **410** réalisée en un premier matériau électriquement conducteur et plus mou que le fil de la caténaire **104**. Typiquement, la bande de frottement **410** est réalisée en matériau carboné. Elle constitue la zone active pour le transfert d'énergie électrique de la caténaire **104** vers l'archet et le pantographe. Elle peut être insérée longitudinalement à l'intérieur de l'étrier **420**. Cette bande d'usure **410** présente une zone centrale **W** d'épaisseur sensiblement constante qui représente sa zone principale d'usure. La hauteur initiale de la surface supérieure **412** de cette bande d'usure **410** est repérée par la ligne **Z1** de la figure 6. Selon l'invention, la bande d'usure **410** comprend dans sa partie inférieure un élément allongé **440,** qui est réalisé en un deuxième matériau électriquement conducteur. La conductivité électrique de ce deuxième matériau électriquement conducteur doit être supérieure à celle dudit premier matériau électriquement conducteur. Cet élément conducteur longitudinal **440** doit être électriquement isolé par rapport à la bande d'usure **410** et par rapport au support métallique (étrier) **420.**

Dans un mode de réalisation avantageux ledit élément longitudinal **440** est noyé dans un matériau électriquement isolant **430**. Ce dernier, qui est reçu dans une gorge 415 visible à la figure 4, peut être une résine électriquement isolante. Ce matériau isolant **430** peut former un matériau de maintien qui facilite la manipulation de l'élément conducteur longitudinal **440**. Ce dernier peut être un fil de cuivre ou une barrette plate de cuivre. Sa surface supérieure est avantageusement disposée à une altitude constante **X1.**

Ledit élément conducteur longitudinal **440** est relié à chacune de ses extrémités à un connecteur **460**. Afin d'assurer l'isolation électrique entre ledit élément conducteur longitudinal **440** et le support métallique **420** on prévoit une gaine de protection **450** isolante qui sépare l'élément conducteur longitudinal **440** du support métallique **420.**

Le contact frottant entre la caténaire **104** et la surface supérieure **412** de la bande d'usure **410** se fait à des endroits différents répartis sur la zone principale d'usure **W,** car le centrage de la caténaire **104** par rapport à la voie ferrée **100** n'est pas constant (les repères **104', 104"** et **104"'** indiquent différentes positions de la caténaire **104** au cours du trajet). De ce fait l'usure de la zone principale d'usure **W** est assez uniforme. Au fur et à mesure que la caténaire **104** entre en contact frottant avec la surface supérieure **412** de la bande d'usure **410,** cette dernière est soumise à une usure. Par conséquent, l'altitude de cette surface supérieure diminue, tout comme la distance $d$ entre la surface supérieure **412** et la surface supérieure de l'élément longitudinal **440**. A titre d'exemple, lorsque la surface **412** se situera à la hauteur **Z2,** la distance entre la surface supérieure **412** de la bande et la surface supérieure de l'élément longitudinal **440** aura diminué de $d$ à $d1$.

EP 3 691 929 B1

Comme cela est visible sur la figure 4, lorsque la hauteur de la bande d'usure **410** diminue jusqu'au niveau supérieur **P** du matériau isolant **430,** le contact électrique entre la bande de frottement **400** et la caténaire **104** n'est pas interrompu car la largeur **L** dudit matériau isolant **430** est faible par rapport à la largeur **F** de la bande d'usure **410**. La bande de frottement **400** peut donc continuer à remplir sa fonction de collecteur de courant entre la caténaire **104** et le véhicule **100** pendant que l'usure de la bande d'usure **410** progresse dans le matériau isolant **430**. Lorsque l'épaisseur dudit matériau isolant **430** a été enlevée par frottement avec la caténaire **104,** un contact électrique est établi entre la caténaire **104** et l'élément conducteur longitudinal **440**. Cet évènement pourra être détecté de différentes manières. Un procédé de détection particulièrement avantageux sera décrit ci-dessous. Si l'usure de la bande d'usure **410** progresse encore plus, l'élément conducteur longitudinal **440** finira par être sectionné ; cet évènement pourra être détecté de différentes manières. Selon l'invention, il est préféré de détecter non pas le sectionnement de l'élément conducteur longitudinal **440** mais l'établissement d'un contact électrique entre ledit élément conducteur longitudinal **440** et la caténaire **104.**

Les figures 5 et 7 présentent un deuxième mode de réalisation de l'invention. Il se distingue du premier par le fait que le matériau isolant **430** renferme deux éléments conducteurs longitudinaux **440, 441** situés à une profondeur **X1** et **Y1,** respectivement.

Comme dans le premier mode de réalisation chaque extrémité de ces conducteurs est reliée à un connecteur **460,** et est conduite à travers le support métallique **420** de manière à ce qu'il n'y ait pas de continuité électrique entre l'élément conducteur longitudinal **440** et ledit support métallique **420** ; cette isolation électrique peut être réalisée à l'aide d'une gaine isolante **430**. Dans ce mode de réalisation on dispose de deux circuits indépendants, un premier circuit comprenant le premier élément conducteur longitudinal **440,** et un deuxième circuit comprenant le deuxième élément conducteur longitudinal **441**. Lorsque l'usure de la bande d'usure **410** progresse, c'est d'abord le premier conducteur longitudinal **440** qui entre en contact avec la caténaire **104** ; cet évènement pourra être détecté de différentes manières. Lorsque l'usure de la bande d'usure **410** par la caténaire **104** (cette dernière étant plus dure que les matériaux de la bande d'usure **410**) se poursuit, c'est le deuxième élément conducteur longitudinal **441** qui finit par entrer en contact avec la caténaire **104** ; cet événement pourra également être détecté. Comme indiqué ci-dessus en relation avec le premier mode de réalisation, il est également possible de détecter non pas l'établissement d'un contact électrique entre la caténaire **104** et l'élément conducteur longitudinal **440** mais le sectionnement de ce dernier, mais ce mode de détection n'est pas préféré. On peut aussi détecter tous les deux évènements.

La bande de frottement **400** et la bande d'usure **410** selon ce deuxième mode de réalisation de l'invention permettent donc la détection de deux niveaux d'usure distincts. En multipliant les éléments conducteurs longitudinaux il est possible d'ajouter encore d'autres niveaux d'usure, mais cela compliquera le câblage en sortie du connecteur. Conformément à l'invention, l'usure de la bande de frottement **400'** selon le deuxième mode de réalisation, est détectée de la manière suivante. Comme dans le premier mode de réalisation, lorsque que la caténaire entre en contact avec l'élément conducteur supérieur **440,** un premier niveau d'alerte est donné à l'opérateur. Si celui-ci choisit de continuer à faire rouler le véhicule (par exemple jusqu'à sa destination finale ou au moins jusqu'à la gare la plus proche), la caténaire peut alors entrer en contact avec l'élément conducteur inférieur **441**. Dans cette occurrence, un second niveau d'alerte est indiqué à l'opérateur. Dans ce cas, ce dernier peut choisir de stopper immédiatement le véhicule afin de ne pas mettre en danger la caténaire en cas de rupture de la bande de frottement. On peut prévoir que, en même temps que l'alerte est donnée, un automatisme commande le retrait immédiat du pantographe, de sorte qu'il n'est plus en contact avec la caténaire.

Nous décrivons maintenant un procédé de fabrication d'une bande de frottement **400** selon l'invention. On approvisionne un support métallique (étrier) **420,** un élément conducteur longitudinal **440,** une bande d'usure **410,** les gaines de protection isolante **460,** et le matériau électriquement isolant **430** ou son précurseur liquide ou visqueux. On aménage une rainure dans la bande d'usure **410** pour accueillir le matériau électriquement isolant **430**. De cette manière, ledit matériau électriquement isolant permet d'isoler ledit élément électriquement conducteur **440** par rapport à ladite bande d'usure **410.**

Dans une première variante on coule une résine liquide ou visqueuse, précurseur dudit matériau électriquement isolant **430,** dans ladite rainure, et on noie l'élément conducteur longitudinal **440** dans la rainure, par pressage par exemple. Alternativement on peut disposer d'abord l'élément conducteur longitudinal **440** dans la rainure puis couler la résine dans la rainure.

Dans une deuxième variante on approvisionne directement le matériau électriquement isolant **430** sous la forme d'un bloc convenablement formé (par exemple par moulage ou usinage), et on aménage dans ce bloc un orifice longitudinal dans lequel on insère ledit élément conducteur longitudinal **440**. Puis on fixe la partie inférieure de la bande d'usure **410** dans le profilé **420** convenablement préformé, on pose la gaine de protection isolante **450,** et on sort les extrémités dudit élément conducteur longitudinal **440** à travers ladite gaine **450**. On peut utiliser une colle pour fixer le bloc du matériau électriquement isolant dans ladite rainure.

Un procédé analogue peut être mis en oeuvre pour introduire deux ou plusieurs éléments conducteurs longitudinaux **440,441** à deux profondeurs différents dans la bande d'usure **410**.

Nous décrivons maintenant un mode de détection utilisable avec la bande de frottement **400** selon l'invention. Ce mode de détection détecte la survenance d'une continuité électrique entre l'élément conducteur longitudinal **440** et son environnement ; cet évènement résulte de l'usure du matériau électriquement isolant **430** par le frottement sur la caténaire **104,** qui est plus dure que la bande d'usure **410,** le matériau électriquement isolant **430** et l'élément conducteur longitudinal **440.** Ce mode de détection est basé sur le principe d'un circuit dit circuit RLC (Résistance (R) - Inductance (L) - Capacité (C)).

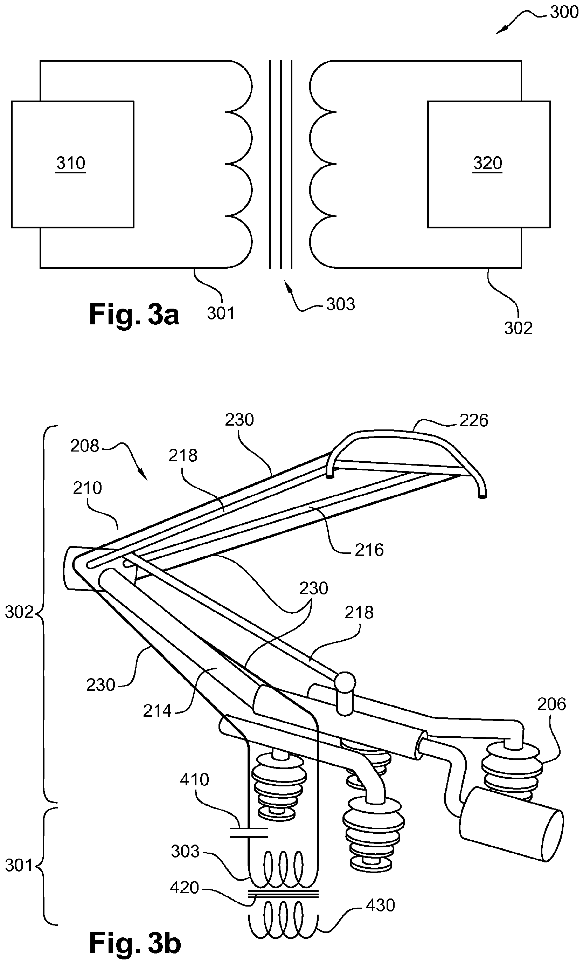

En référence à la figure 3(a), l'élément conducteur longitudinal **440** est intégré à un circuit dit secondaire **302,** lequel est couplé à un circuit dit primaire **301,** ces deux circuits étant reliés entre eux par un couplage inductif (symbolisé par le repère **303**). Le circuit primaire **301** comprend un système électronique de contrôle **310** localisé de préférence à l'intérieur du véhicule ferroviaire **100** portant le pantographe **108.** Le circuit secondaire **302** comporte un système résonnant **320** représenté par le pantographe **108** ; il comprend notamment la bande de frottement **400.** Le circuit primaire **301** et le circuit secondaire **302** forment un circuit de détection au sens de l'invention, désigné dans son ensemble par la référence **300.**

Comme cela est illustré sur la figure 3(b), qui montre un pantographe à archet simple, avec une seule bande de frottement **226,** le circuit secondaire **302** du circuit de détection **300** comprend le pantographe **108** ; il se comporte comme un circuit RLC, dans lequel :

- La résistance ($R$) est composée par la résistance $R_1$ du câblage de la boucle électrique du pantographe **108** et surtout de la résistance $R_2$ du conducteur intégré à la bande de frottement **226** dont la valeur augmente avec la température de ladite bande de frottement ;
- La capacité ($C$) est intégrée au circuit secondaire ;
- L'inductance ($L$) résulte du couplage du circuit secondaire avec le circuit primaire.

Sur la figure 3(b) le câblage de la boucle électrique du pantographe **108** est représenté par le repère **230,** la capacité par le repère numérique **510,** l'inductance du circuit secondaire par le repère numérique **520,** l'inductance du circuit primaire par le repère numérique **530.**

Avantageusement la résistance $R_2$ représente plus de 90 % de la résistance du circuit secondaire ; cela permet d'améliorer la précision de la surveillance. Dans la plage des températures opératoires, la résistance $R_2$ évolue typiquement entre 100 % et 140 %.

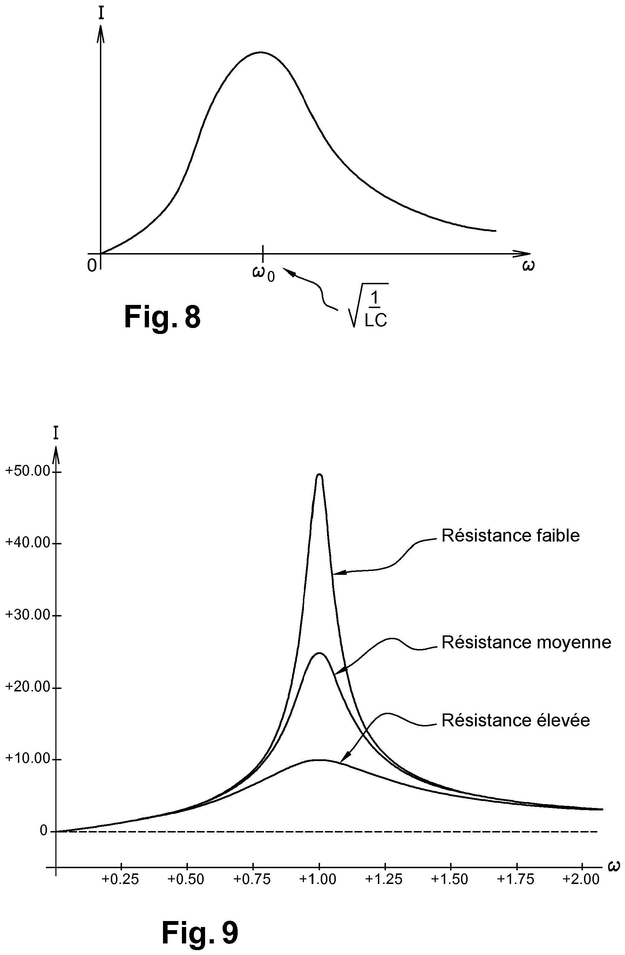

Le circuit secondaire **302** est excité par le circuit primaire **301** avec une fréquence qui correspond à la fréquence de résonance du circuit secondaire afin de maximiser l'amplitude de la réponse en intensité du circuit secondaire, ce qui permet d'optimiser la sensibilité du système de surveillance du courant du secondaire. La fréquence de résonance $f_0$ d'un circuit RLC est donnée par l'équation $f_0 = (1/2\pi) \sqrt{(LC)}$. La réponse en intensité d'un circuit RLC en fonction de la fréquence d'excitation $\omega$ est représentée sur la figure 8.

La surveillance de la réponse en intensité du circuit secondaire selon l'invention est basée sur deux principes :

(i) Surveillance de l'usure et/ou de l'endommagement de la bande de frottement : Le circuit secondaire arrête d'osciller dès que le conducteur de la bande de frottement est sectionné et ouvre le circuit ; selon le positionnement dudit élément conducteur **440** au sein de la bande de frottement **226** cet évènement est interprété comme l'atteinte du niveau d'usure ou comme l'endommagement de la bande de frottement ; dans le deuxième cas on peut prévoir que le dispositif de déploiement **224** retire le pantographe **108** de la caténaire **104** pour protéger cette dernière.

(ii) Surveillance de la température de la bande de frottement :
La résistance du circuit secondaire **302** augmente avec la température de la bande de frottement **226.** L'intensité $I$ dans le circuit secondaire **302** évolue selon la formule

$$I = I_0 / \sqrt{[R_2+(\omega L - 1/\omega C)]}.$$

Dans le cas où la fréquence d'excitation est la fréquence propre du circuit, la formule devient :

$$I = I_0 / R.$$

Dans la plage de température surveillée, le courant va donc évoluer dans une plage de 100 % à 73 %. Plus la température de la bande de frottement **400** augmente, plus la résistance du circuit secondaire **302** augmente, plus l'intensité du circuit secondaire baisse. La figure 9 montre l'évolution de l'intensité dans un circuit RLC en fonction de la de la fréquence d'excitation pour trois valeurs de résistance : résistance élevée (courbe (a), résistance élevée (courbe (c), résistance moyenne (courbe (b)).

Selon l'invention, à la mise en service du circuit **300,** la température extérieure et la résistance du circuit secondaire **302** sont mesurés. La mesure de la température peut se faire par une sonde de température (non montrée sur les figures) à l'arrêt, en l'absence de toute perturbation électrique. L'évolution de l'intensité du circuit secondaire **302** permet alors de connaître la température atteinte par la bande de frottement en service.

La surveillance de la température au coeur de la bande de frottement en temps réel permet d'identifier les zones du réseau où la commutation est difficile et permet de générer une alerte en cabine si la température dépasse un certain seuil. Il est alors possible d'adapter la vitesse du train ou bien de prévoir une intervention d'ajustement de la tension de la caténaire. Un enregistrement de ces données par l'enregistreur d'évènement du train permet d'autre part de garder un historique des conditions de circulation et d'élaborer à terme des modèles de vieillissement de la bande carbone.

Conformément à l'invention, l'usure de la bande de frottement **400** selon le premier mode de réalisation (figures 4 et 6), est détectée de la manière suivante. Lorsque l'élément conducteur unique **440** vient en contact avec la caténaire, on détecte alors une réponse anormale du circuit secondaire **302**, à l'égard de l'excitation émise par le circuit primaire ; cette réponse anormale étant caractérisée par un arrêt de l'oscillation du circuit secondaire **302** qui est alors ouvert. Cette information est alors récupérée par le système de déploiement du pantographe qui déclenche un retrait du bras du pantographe, replaçant ainsi le système classique de l'ADD. Cette variante du système est adaptée aux applications de type tramway.

Conformément à l'invention, l'usure de la bande de frottement **400** selon le deuxième mode de réalisation (figures 5 et 7), est détectée de la manière suivante. Comme dans le premier mode de réalisation, lorsque que la caténaire entre en contact avec l'élément conducteur supérieur **440,** un premier niveau d'alerte est donné à l'opérateur. Si celui-ci choisit de continuer à faire rouler le véhicule (par exemple jusqu'à sa destination finale ou au moins jusqu'à la gare la plus proche), la caténaire peut alors entrer en contact avec l'élément conducteur inférieur **441.** Dans cette occurrence, un second niveau d'alerte est indiqué à l'opérateur. Dans ce cas, ce dernier peut choisir de stopper immédiatement le véhicule afin de ne pas mettre en danger la caténaire en cas de rupture de la bande de frottement. On peut prévoir que, en même temps que l'alerte est donnée, un automatisme commande le retrait immédiat du pantographe, de sorte qu'il n'est plus en contact avec la caténaire.

Dans un exemple, on a réalisé un système de surveillance de l'usure de la bande d'usure d'une bande de frottement d'un pantographe selon l'invention avec un insert **510** conducteur en cuivre d'une épaisseur d'environ 0,4 mm. Dans le circuit secondaire de type RLC, la valeur de l'inductance L était de l'ordre de 15 mH, la valeur de la capacité C était de l'ordre de 100 pF, et la valeur de la fréquence de résonance était de l'ordre de 13 000 Hz.

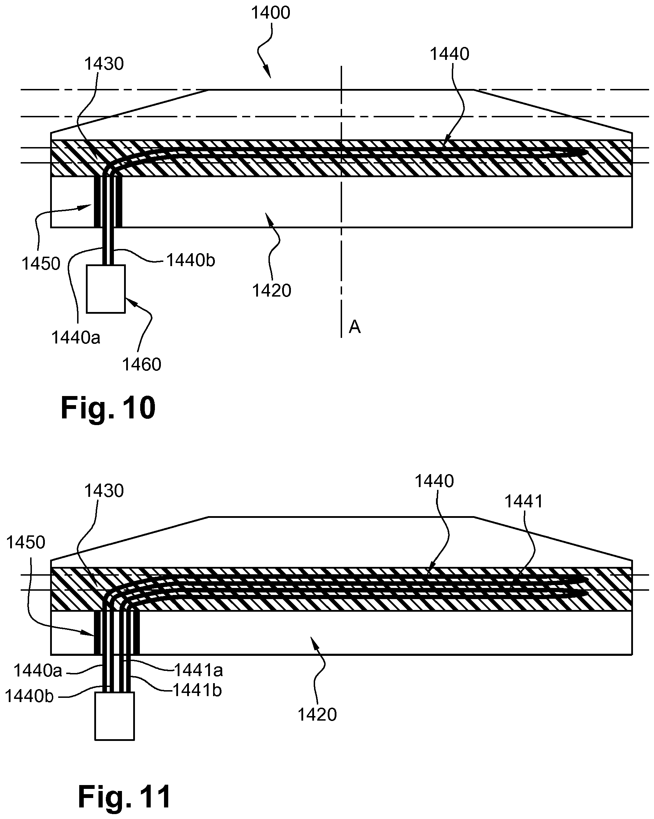

La figure 10 illustre une variante de la bande de frottement conforme au premier mode de réalisation de l'invention, illustrée notamment en figure 6. Sur cette figure 10, les éléments mécaniques analogues à ceux de la figure 6 y sont affectés des mêmes numéros de référence, augmentés de 1000. La bande de frottement **1400** de cette figure 10 diffère essentiellement de celle **400** de la figure 6, en ce qu'elle comprend une unique gaine **1450** et un unique connecteur **1460.** Par ailleurs, l'élément conducteur **1440** forme une boucle, de sorte que ses deux extrémités **1440a** et **1440b** sont adjacentes. Ces extrémités s'étendent dans la gaine unique **1450** et coopèrent avec le connecteur unique **1460** précité.

La figure 11 illustre une variante de la bande de frottement conforme au deuxième mode de réalisation de l'invention, illustrée notamment en figure 7. Sur cette figure 11, les éléments mécaniques analogues à ceux de la figure 7 y sont affectés des mêmes numéros de référence, augmentés de 1000. La bande de frottement **1400** de cette figure 11 diffère essentiellement de celle **400** de la figure 7, en ce qu'elle comprend une unique gaine **1450** et un unique connecteur **1460.** Par ailleurs, chaque élément conducteur **1440** et **1441** forme une boucle, de sorte que leurs extrémités respectives **1440a** et **1440b, 1441a** et **1441b** sont adjacentes. Ces différentes extrémités de conducteurs s'étendent dans la gaine unique **1450** et coopèrent avec le connecteur unique **1460** précité.

Les variantes des figures 10 et 11 présentent des avantages spécifiques, notamment de nature économique. En effet, ces variantes permettent de réduire le nombre d'éléments constitutifs, puisqu'elles font appel à une unique gaine **1450,** ainsi qu'à un unique connecteur **1460.**

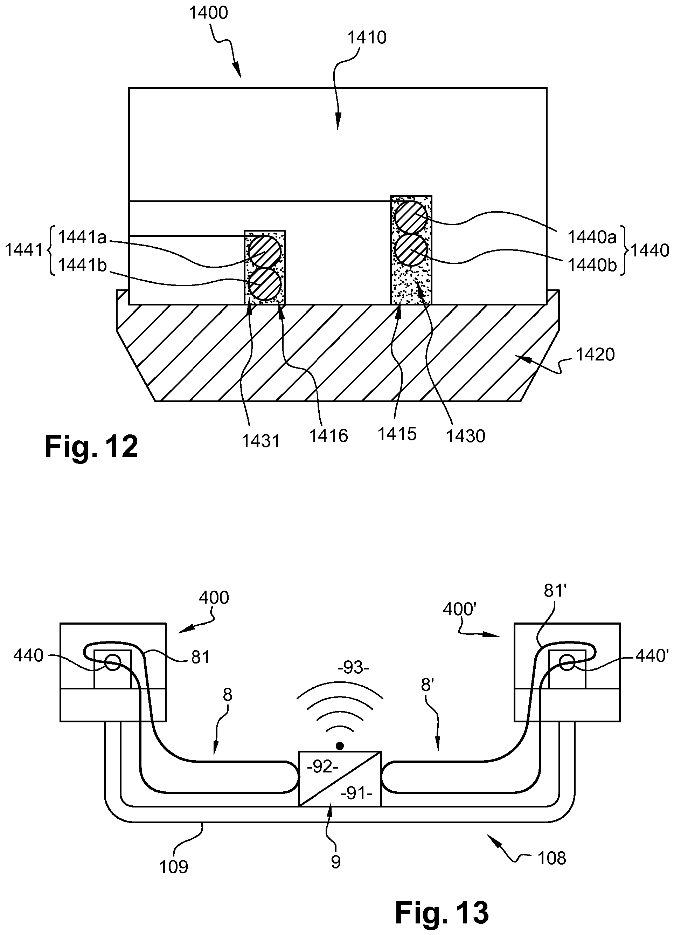

La figure 12 illustre une variante supplémentaire de réalisation, relative à la bande de frottement de la figure 11. Dans cette variante, la bande d'usure 1410 est creusée de deux gorges 1415 et 1416 lesquelles débouchent sur l'extrémité inférieure de cette bande. Chaque gorge reçoit un insert respectif 1430 et 1431, lequel est maintenu à l'intérieur de sa gorge, par exemple par coincement. De manière typique, ces inserts sont réalisés en un matériau silicone.

Chaque insert permet le positionnement d'un conducteur respectif 1440 et 1441, ces conducteurs étant analogues à ceux illustrés sur la figure 11. La surface supérieure du conducteur 1440 est située au-dessus de la surface supérieure du conducteur 1441. Dans ces conditions, comme dans l'exemple de la figure 11, le conducteur supérieur 1440 peut donner un premier degré d'alerte alors que le conducteur inférieur 1441 peut donner un second degré d'alerte.

Comme cela est visible sur cette figure 12, les deux brins 1440a et 1440b, respectivement 1441a et 1441b, de chaque conducteur sont en contact mutuel. Cela est avantageux, car cela permet de réduire l'encombrement global dans la direction de la hauteur. Dans ce cas, afin d'éviter tout contact électrique entre les brins en regard, chaque conducteur est équipé d'une enveloppe isolante, de manière connue en soi.

La variante de la figure 12 présente des avantages spécifiques, relatifs en particulier à la simplicité de fabrication mais surtout à la précision de positionnement des différents seuils de détection. En effet les deux boucles peuvent être positionnées à des hauteurs indépendantes et très précises, choisies en fonction du besoin de l'utilisateur. La boucle la plus haute peut déclencher une première alerte d'usure qui se situe aussi près que nécessaire de l'alerte d'usure déclenchée par la deuxième boucle, permettant ainsi une approche plus fine de la maintenance conditionnelle. Par exemple, pour une bande dont l'usure maximum est de 35 mm de carbone, un premier seuil d'alerte peut être déclenché à 85% d'usure (soit 29.7 mm d'usure) et le suivant à 92% (soit 32.2 mm). L'usinage et le positionnement précis du conducteur dans chaque gorge permet cette précision de détection.

La figure 13 illustre une variante de réalisation de l'invention, dans laquelle chaque connecteur 460 permet de relier l'élément conducteur 440 à un câblage dit de liaison **81,** s'étendant entre ces connecteurs. Cet élément **440** forme, avec les deux connecteurs et le câblage, un circuit dit de détection, désigné dans son ensemble par la référence **8.** Le branchement entre les deux extrémités du câblage **81** et les connecteurs **71** et **72,** illustré sur la figure 6, est avantageusement de type amovible.

Dans ce mode de réalisation, l'archet porte à son sommet deux bandes de frottement conformes à l'invention **400** et **400'.** Par ailleurs un module de contrôle/commande **9** est disposé au voisinage à la fois du câblage de liaison **81** du premier circuit de détection **8,** mais aussi du câblage de liaison **81'** du second circuit de détection associé à la deuxième bande **400'.** Comme le montre la figure 12, ce module **9** est fixé sur la tête **109** du pantographe **108,** par tout moyen approprié. Ce module **9** permet non seulement de détecter un dysfonctionnement au niveau de chaque circuit **8** ou **8',** mais également de fournir des informations relatives à ce dysfonctionnement en direction du véhicule ferroviaire et/ou du sol.

A cet effet ce module **9** est tout d'abord équipé de moyens de détection **91,** de type connu en soi, qui permettent d'identifier une variation d'un paramètre de fonctionnement du circuit **8** ou **8',** c'est à dire une coupure électrique au niveau de celui-ci. Par ailleurs ce module est muni de moyens d'alerte **92,** permettant de fournir des informations circonstanciées en direction du véhicule ferroviaire et/ou du sol. Ces moyens d'alerte sont avantageusement de type sans fil, ce qui est matérialisé par la référence **93.** Ces moyens d'alerte **92,** de nature classique, sont par exemple du type binaire (1=circuit fermé, 0=circuit ouvert). Dès que l'usure de la bande d'usure atteint le conducteur **5,** ce conducteur se coupe par frottement avec la caténaire et s'ouvre, changeant ainsi la résistance électrique du circuit.

En référence au mode de réalisation de la figure 12, l'usure de la bande de frottement **1** est détectée de la manière suivante. Lors de la mise en place d'une bande de frottement neuve, cette dernière est reconnue par le module, qui met à zéro le compteur temps. Puis, lorsque l'élément conducteur **440** est sectionné/usé par la caténaire, le module **9** détecte alors une réponse anormale du circuit **8** ou **8'** dont la résistance devient très élevée, voire infinie. Cette première information est alors transmise en direction du véhicule ferroviaire et/ou du sol. Par ailleurs, l'occurrence de cet évènement est affectée d'un premier temps caractéristique t1.

Le module **9** peut alors calculer la vitesse d'usure moyenne de la bande d'usure et ainsi, par extrapolation, générer une analyse prédictive de l'usure de la nouvelle bande. Le module **9** transmet cette information à l'opérateur, qui peut alors planifier l'opération de maintenance de manière optimale. Enfin, le module autonome **9** est capable d'envoyer régulièrement au véhicule ferroviaire et/ou au sol un message confirmant son bon état de fonctionnement. Toute avarie de fonctionnement du système de surveillance et, en particulier, de ce module **9** sera donc automatiquement détectée et communiquée aux personnes concernées.

Le fait de prévoir un tel module de contrôle/commande, apte à transmettre des informations en mode « sans fil », présente des avantages spécifiques. Cela permet en effet d'éviter de relayer ce module, en mode filaire, à l'électronique du véhicule ferroviaire. Cette solution est à comparer, d'une part, avec une connexion au moyen d'un fil conducteur, qui serait incompatible avec la différence de potentiels. Elle est à comparer, d'autre part, avec une connexion par fibre optique, qui est relativement coûteuse et difficile à mettre en place.

L'invention présente de nombreux avantages.

La bande de frottement de l'invention peut remplacer, ou bien éventuellement venir en complément, d'un système automatique d'abaissement d'urgence (ADD) de type connu. Elle est plus légère, plus simple et plus facile à monter et à démonter qu'une bande de frottement de l'art antérieur, équipée d'un système à circuit pneumatique.

Elle permet en outre de s'affranchir de l'installation de détecteurs dans la tête du pantographe et dans la bande de frottement, qui est un endroit exposé et perturbé (chocs, arcs électriques, pollution électromagnétique, températures ponctuellement élevées).

Le pantographe, équipé de la bande de frottement de l'invention, ne comprend pas de dispositifs de mesure additionnels (sauf, peut-être, la sonde de température, qui n'a cependant pas besoin d'être localisé dans le pantographe) ; la bande d'usure doit simplement comprendre un élément conducteur, qui est un composant passif.

L'invention permet d'identifier de manière claire un arrachement de la bande d'usure, ou bien l'atteinte d'un certain niveau d'usure. Elle surveille toute la largeur de la bande d'usure, car elle ne fait pas appel à des capteurs discrets, localisés. Dans l'exemple décrit, le circuit secondaire **302** arrêtera alors d'osciller (le circuit secondaire s'ouvre).

L'invention permet également de prévoir plusieurs niveaux d'alerte, en équipant avantageusement la bande de frottement au moyen de plusieurs éléments de détection.

L'invention permet également de déterminer la température de la bande d'usure et de connaître ainsi la qualité de commutation entre la bande et la caténaire : l'amplitude du signal sera alors diminuée. Le circuit primaire mesure la réponse en amplitude du circuit secondaire pour en déduire l'évolution de l'état de la bande d'usure (rupture, montée en température, niveau d'usure, épaisseur résiduelle). Les circuits primaire et secondaire ne sont pas perturbés par les nombreux facteurs de perturbation présents dans l'environnement proche.

L'invention permet d'apporter un équivalent au système ADD sur les véhicules de type tramway qui sont dépourvus de circuit d'air comprimé.

La présente invention n'est pas limitée au mode de réalisation décrit précédemment, mais est au contraire définie par les revendications qui suivent. Il sera en effet apparent à l'homme du métier que des modifications peuvent y être apportées.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

## Revendications

1. Système comprenant une bande de frottement (400) et au moins un circuit de détection (300), ladite bande étant pour un pantographe (108) d'un véhicule (100), notamment d'un véhicule ferroviaire, ladite bande de frottement comprenant des moyens de fixation sur ledit pantographe, notamment un étrier (420), ainsi qu'une région active ou bande d'usure (410) destinée à entrer en contact avec une caténaire (104), cette bande d'usure étant réalisée un premier matériau électriquement conducteur,

   ladite bande de frottement comprenant des moyens de contact (440 ; 440, 441), propres à venir en contact avec la caténaire lors d'une diminution d'épaisseur de ladite bande d'usure, **caractérisée en ce que** les moyens de contact comprennent au moins un élément de contact électriquement conducteur (440 ; 440, 441), réalisé en un deuxième matériau électriquement conducteur dont la conductivité électrique est supérieure à celle dudit premier matériau électriquement conducteur, ledit élément électriquement conducteur (440) étant allongé et s'étendant transversalement à l'intérieur de la bande d'usure, en référence à la direction d'avancée du véhicule, et **en ce que** la bande de frottement comprend en outre des moyens (430) d'isolation électrique entre ledit élément électriquement conducteur allongé et la bande d'usure,
   et des moyens de connexion dudit élément électriquement conducteur allongé audit circuit de détection (300), intégrant ledit élément électriquement conducteur allongé.

2. Système selon la revendication 1, **caractérisé en ce que** les moyens d'isolation électrique comprennent une gaine électriquement isolante (450), s'étendant dans la bande d'usure (410), ledit élément électriquement conducteur étant logé dans ladite gaine.

3. Système selon l'une quelconque des revendications 1 à 2, **caractérisé en ce qu'**elle comporte deux éléments électriquement conducteurs, un premier élément électriquement conducteur (440) étant tourné vers la caténaire en fonctionnement normal du véhicule de manière à fournir un premier degré d'alerte, alors que le deuxième élément électriquement conducteur (441) est opposé à la caténaire en fonctionnement normal du véhicule de manière à fournir un deuxième degré d'alerte.

4. Système selon la revendication précédente, **caractérisé en ce que** le premier élément conducteur (1440) est logé dans un premier insert (1430), reçu dans une première gorge (1415) de ladite bande d'usure, alors que le second élément conducteur (1441) est logé dans un second insert (1431), reçu dans une seconde gorge (1416) de ladite bande d'usure.

5. Système selon l'une des revendications 1 à 4, **caractérisé en ce que** les moyens de connexion comprennent deux connecteurs électriques (460), prévus aux deux extrémités longitudinales dudit élément électriquement conducteur.

6. Système selon l'une des revendications 1 à 4, **caractérisé en ce que** les moyens de connexion amovible comprennent un unique connecteur électrique (1460), le ou chaque élément électriquement conducteur (1440, 1441) formant une boucle dont les deux extrémités (1440a, 1440b, 1441a, 1441b) coopèrent avec ledit connecteur électrique unique et **en ce que**, notamment, il est prévu une unique gaine et les deux extrémités (1440a, 1440b, 1441a, 1441b) du ou de chaque élément électriquement conducteur (1440, 1441) coopèrent avec ladite gaine unique (1450).

7. Système selon l'une des revendications 1 à 6, **caractérisé en ce que** cette bande de frottement est dépourvue de moyens de détection pneumatique, adaptés pour contenir un fluide sous pression.

8. Véhicule ferroviaire (100) comprenant une caisse (106) et un pantographe (108), ledit pantographe comportant un châssis (202) monté sur ladite caisse dudit véhicule, et un système selon les revendications 1-7, où la bande de frottement (400) est destinée à entrer en contact avec une caténaire et des moyens de liaison entre le châssis et la bande de frottement, ledit véhicule comprenant en outre des moyens de détection, propres à détecter la variation d'un paramètre représentatif dudit circuit de détection, ainsi que des moyens d'alerte aptes à être activés lorsque ladite variation se situe en dehors d'une plage prédéterminée de réponses, notamment en cas de coupure électrique dudit circuit de détection.

9. Véhicule selon la revendication 8, **caractérisé en ce qu'**il comprend en outre un module de contrôle/commande (9) intégrant les moyens de détection et les moyens d'alerte, ce module étant apte à coopérer avec ledit circuit de détection électrique (8, 8'), ledit module de contrôle/commande (9) comprenant notamment des moyens de communication de type sans fil (93), propres à transmettre des informations en direction dudit véhicule ferroviaire et/ou du sol.

10. Véhicule selon la revendication 9, **caractérisé en ce que** ledit module de contrôle/commande (9) est fixé, notamment de manière amovible, sur la tête (109) du pantographe.

11. Véhicule selon l'une des revendications 8 à 10, **caractérisé en ce que** ledit circuit de détection comprend

    - au moins un circuit primaire (301) destiné à être monté sur la caisse du véhicule,
    - au moins un circuit secondaire (302) de type RLC destiné à être monté sur le pantographe ;
    ledit circuit primaire comprenant des moyens de mise en interaction fonctionnelle (303) dudit circuit secondaire, ladite mise en interaction fonctionnelle étant notamment une excitation électromagnétique, lesdits moyens de mise en interaction fonctionnelle entre ledit circuit primaire et ledit circuit secondaire comprenant notammennt une inductance (303) dite primaire appartenant au circuit primaire, et une inductance dite secondaire appartenant au circuit secondaire
    ledit circuit secondaire comprenant ledit au moins un élément électriquement conducteur (440, 441), ainsi que des moyens de connexion électrique, propres à relier ledit au moins un élément électriquement conducteur (440, 441) aux moyens de mise en interaction fonctionnelle.

12. Véhicule selon la revendication précédente, **caractérisé en ce qu'**un premier circuit secondaire comprend ledit premier élément de détection, des premiers moyens de mise en interaction fonctionnelle, et des premiers moyens de connexion électrique, alors qu'un deuxième circuit secondaire comprend ledit deuxième élément de détection, des deuxièmes moyens de mise en interaction fonctionnelle, et des deuxièmes moyens de connexion électrique.

13. Procédé de surveillance de l'usure d'une bande de frottement appartenant au système selon l'une des revendications 1 à 7, cette bande de frottement étant montée sur un véhicule selon l'une des revendications 8 à 12, procédé dans lequel :

    - on détecte au moins une occurrence, pour laquelle ladite la variation du paramètre représentatif dudit circuit de détection se situe en dehors d'une plage prédéterminée de variations,
    - on identifie au moins un type de dysfonctionnement de la bande de frottement, à partir de cette détection.


**Patentansprüche**

1. System, umfassend eine Kontaktleiste (400) und mindestens einen Erkennungskreislauf (300), wobei die Leiste für einen Scherenstromabnehmer (108) eines Fahrzeugs (100), insbesondere eines Schienenfahrzeugs ist, wobei die Kontaktleiste Mittel zum Befestigen an dem Scherenstromabnehmer, insbesondere einen Bügel (420), sowie einen aktiven Bereich oder eine Verschleißleiste (410) umfasst, die dazu bestimmt ist, in Kontakt mit einer Oberleitung (104) zu treten, wobei diese Verschleißleiste aus einem ersten elektrisch leitfähigen Werkstoff gefertigt ist,

   wobei die Kontaktleiste Kontaktmittel (440; 440, 441) umfasst, die geeignet sind, um bei einer Verringerung der Dicke der Verschleißleiste in Kontakt mit der Oberleitung zu gelangen, **dadurch gekennzeichnet, dass** die Kontaktmittel mindestens ein elektrisch leitfähiges Kontaktelement (440; 440, 441) umfassen, das aus einem zweiten elektrisch leitfähigen Werkstoff gefertigt ist, dessen elektrische Leitfähigkeit größer als jene des ersten elektrisch leitfähigen Werkstoffes ist, wobei das elektrisch leitfähige Element (440) länglich ist und sich im Inneren der Verschleißleiste in Bezug auf die Fortbewegungsrichtung des Fahrzeugs quer erstreckt, und dadurch, dass die Kontaktleiste weiter Mittel (430) zur elektrischen Isolierung zwischen dem länglichen elektrisch leitfähigen Element und der Verschleißleiste umfasst, und Mittel zum Verbinden des länglichen elektrisch leitfähigen Elements mit dem Erkennungskreislauf (300), welcher das längliche elektrisch leitfähige Element einbindet.

2. System nach Anspruch 1, **dadurch gekennzeichnet, dass** die Mittel zur elektrischen Isolierung eine elektrisch isolierende Hülle (450) umfassen, die sich in der Verschleißleiste (410) erstreckt, wobei das elektrisch leitfähige Element in der Hülle aufgenommen ist.

3. System nach einem der Ansprüche 1 bis 2, **dadurch gekennzeichnet, dass** es zwei elektrisch leitfähige Elemente beinhaltet, wobei ein erstes elektrisch leitfähiges Element (440) im Normalbetrieb des Fahrzeugs zur Oberleitung gedreht ist, um einen ersten Warnungsgrad vorzusehen, während das zweite elektrisch leitfähige Element (441) im Normalbetrieb des Fahrzeugs von der Oberleitung abgewandt ist, um einen zweiten Warnungsgrad vorzusehen.

4. System nach dem vorstehenden Anspruch, **dadurch gekennzeichnet, dass** das erste leitfähige Element (1440) in einem ersten Einsatz (1430) untergebracht ist, der in einer ersten Nut (1415) der Verschleißleiste aufgenommen ist, während das zweite leitfähige Element (1441) in einem zweiten Einsatz (1431) untergebracht ist, der in einer zweiten Nut (1416) der Verschleißleiste aufgenommen ist.

5. System nach einem der Ansprüche 1 bis 4, **dadurch gekennzeichnet, dass** die Mittel zum Verbinden zwei elektrische Steckverbinder (460) umfassen, die an den beiden Längsenden des elektrisch leitfähigen Elements vorgesehen sind.

6. System nach einem der Ansprüche 1 bis 4, **dadurch gekennzeichnet, dass** die Mittel zum lösbaren Verbinden einen einzigen elektrischen Steckverbinder (1460) umfassen, wobei das oder jedes elektrisch leitfähige Element (1440, 1441) eine Schleife bildet, deren beiden Enden (1440a, 1440b, 1441a, 1441b) mit dem einzigen elektrischen Steckverbinder zusammenwirken, und dadurch, dass insbesondere eine einzige Hülle vorgesehen ist, und die beiden Enden (1440a, 1440b, 1441a, 1441b) des oder jedes elektrisch leitfähigen Elements (1440, 1441) mit der einzigen Hülle (1450) zusammenwirken.

7. System nach einem der Ansprüche 1 bis 6, **dadurch gekennzeichnet, dass** diese Kontaktleiste mit keinen pneumatischen Erkennungsmitteln versehen ist, die angepasst sind, um ein unter Druck stehendes Fluid zu enthalten.

8. Schienenfahrzeug (100), umfassend eine Karosserie (106) und einen Scherenstromabnehmer (108), wobei der Scherenstromabnehmer ein Gestell (202) beinhaltet, das auf der Karosserie des Fahrzeugs montiert ist, und ein System nach den Ansprüchen 1-7, wobei die Kontaktleiste (400) dazu bestimmt ist, in Kontakt mit einer Oberleitung und Mitteln zum Verbinden zwischen dem Gestell und der Kontaktleiste zu treten, wobei das Fahrzeug weiter Mittel zum Erkennen umfasst, die geeignet sind, um die Variation eines für den Erkennungskreislauf repräsentativen Parameters zu erkennen, sowie Warnmittel, die imstande sind, aktiviert zu werden, wenn sich die Variation außerhalb eines vorbestimmten Bereichs an Reaktionen befindet, insbesondere im Falle eines Stromausfalls im Erkennungskreislauf.

9. Fahrzeug nach Anspruch 8, **dadurch gekennzeichnet, dass** es weiter ein Modul zum Kontrollieren/Steuern (9) umfasst, welches die Mittel zum Erkennen und die Warnmittel einbezieht, wobei dieses Modul imstande ist, mit dem elektrischen Erkennungskreislauf (8, 8') zusammenzuwirken, wobei das Modul zum Kontrollieren/Steuern (9) insbesondere Kommunikationsmittel der drahtlosen Art (93) umfasst, die geeignet sind, Informationen in Richtung des Schienenfahrzeugs und/oder des Bodens zu übertragen.

10. Fahrzeug nach Anspruch 9, **dadurch gekennzeichnet, dass** das Modul zum Kontrollieren/Steuern (9) insbesondere in lösbarer Form am Kopf (109) des Scherenstromabnehmers befestigt ist.

11. Fahrzeug nach einem der Ansprüche 8 bis 10, **dadurch gekennzeichnet, dass** der Erkennungskreislauf umfasst

- mindestens einen Primärkreislauf (301), der dazu bestimmt ist, auf der Karosserie des Fahrzeugs montiert zu werden,
- mindestens einen Sekundärkreislauf (302) in der Art RLC, der dazu bestimmt ist, auf dem Scherenstromabnehmer montiert zu werden;

wobei der Primärkreislauf Mittel zur betrieblichen Interaktionsanbahnung (303) des Sekundärkreislaufs umfasst, wobei die betriebliche Interaktionsanbahnung insbesondere eine elektromagnetische Erregung ist, wobei die Mittel zur betrieblichen Interaktionsanbahnung zwischen dem Primärkreislauf und dem Sekundärkreislauf insbesondere eine sogenannte Primär-Induktivität (303) umfassen, die dem Primärkreislauf angehört, und eine sogenannte Sekundär-Induktivität, die dem Sekundärkreislauf angehört wobei der Sekundärkreislauf das mindestens eine elektrisch leitfähige Element (440, 441), sowie Mittel zur elektrischen Verbindung umfasst, die geeignet sind, das mindestens eine elektrisch leitfähige Element (440, 441) mit den Mitteln zur betrieblichen Interaktionsanbahnung zu verbinden.

12. Fahrzeug nach dem vorstehenden Anspruch, **dadurch gekennzeichnet, dass** ein erster Sekundärkreislauf das erste Erkennungselement, erste Mittel zur betrieblichen Interaktionsanbahnung und erste elektrische Verbindungsmittel umfasst, während ein zweiter Sekundärkreislauf das zweite Erkennungselement, zweite Mittel zur betrieblichen Interaktionsanbahnung und zweite elektrische Verbindungsmittel umfasst.

13. Verfahren zur Überwachung des Verschleißes einer Kontaktleiste, die dem System nach einem der Ansprüche 1 bis 7 angehört, wobei diese Kontaktleiste auf einem Fahrzeug nach einem der Ansprüche 8 bis 12 montiert ist, Verfahren, bei dem:

- mindestens ein Auftreten erkannt wird, bei dem sich die Variation des für den Erkennungskreislauf repräsentativen Parameters außerhalb eines vorbestimmten Bereichs von Variationen befindet,
- mindestens eine Art von Fehlfunktion der Kontaktleiste ausgehend von dieser Erkennung identifiziert wird.

**Claims**

1. A system comprising a contact strip (400) and at least one detection circuit (300), said strip being for a pantograph (108) of a vehicle (100), in particular of a rail vehicle, said contact strip comprising attachment means on said pantograph, in particular a yoke (420), as well as an active region or wearing strip (410), intended to come into contact with a catenary (104), this wearing strip being made of a first electrically conductive material,

   said contact strip comprising contact means (440; 440, 441), suitable for coming into contact with the catenary during a decrease in thickness of said wearing strip, **characterised in that** the contact means comprise at least one electrically conductive contact element (440; 440, 441), made of a second electrically conductive material, of which the electrical conductivity is greater than that of said first electrically conductive material, said electrically conductive element (440) being extended and extending transversely inside the wearing strip, in reference to the forward direction of the vehicle,
   and **in that** the contact strip further comprises electrical insulation means (430) between said extended electrically conductive element and the wearing strip,
   and means for connecting said extended electrically conductive element to said detection circuit (300), integrating said extended electrically conductive element.

2. The system according to claim 1, **characterised in that** the electrical insulation means comprise an electrically insulating sleeve (450), extending in the wearing strip (410), said electrically conductive element being housed in said sleeve.

3. The system according to any of claims 1 to 2, **characterised in that** it includes two electrically conductive elements, a first electrically conductive element (440) being rotated towards the catenary in normal operation of the vehicle so as to provide a first warning level, while the second electrically conductive element (441) is opposite the catenary in normal operation of the vehicle so as to provide a second warning level.

4. The system according to the preceding claim, **characterised in that** the first conductive element (1440) is housed in a first insert (1430), received in a first recess (1415) of said wearing strip, while the second conductive element (1441) is housed in a second insert (1431), received in a second recess (1416) of said wearing strip.

5. The system according to one of claims 1 to 4, **characterised in that** the connection means comprise two electrical connectors (460), provided at the two longitudinal ends of said electrically conductive element.

6. The system according to one of claims 1 to 4, **characterised in that** the removable connection means comprise one single electrical connector (1460), the or each electrically conductive element (1140, 1441) forming a loop of which the two ends (1140a, 1140b, 1141a, 1141b) cooperate with said single electrical connector and **in that**, in particular, one single sleeve is provided, and the two ends (1140a, 1440b, 1441a, 1441b) of the or of each electrically conductive element (1440, 1441) cooperate with said single sleeve (1450).

7. The system according to one of claims 1 to 6, **characterised in** this contact strip has no pneumatic detection means, suitable for containing a pressurised fluid.

8. A rail vehicle (100) comprising a body (106) and a pantograph (108), said pantograph comprising a chassis (202) mounted on said body of said vehicle, and a system according to claims 1 to 7, where the contact strip (400) is intended to come into contact with a catenary and connection means between the chassis and the contact strip, said vehicle further comprising detection means, specific to detecting the variation of a parameter representative of said detection circuit, as well as warning means, capable of being activated when said variation is situated outside of a predetermined response range, in particular in case of electrical cut-off of said detection circuit.

9. The vehicle according to claim 8, **characterised in that** it further comprises a control/command module (9) integrating the detection means and the warning means, this module being capable of cooperating with said electrical detection circuit (8, 8'), said control/command module (9) comprising in particular communication means of the wireless type (93), specific to transmitting information in the direction of said rail vehicle and/or of the ground.

10. The vehicle according to claim 9, **characterised in that** said control/command module (9) is attached, in particular removably, to the head (109) of the pantograph.

11. The vehicle according to one of claims 8 to 10, **characterised in that** said detection circuit comprises

    - at least one primary circuit (301) intended to be mounted on the body of the vehicle,
    - at least one secondary circuit (302) of the RLC type intended to be mounted on the pantograph;
    said primary circuit comprising functional interaction means (303) of said secondary circuit, said functional interaction being in particular an electromagnetic excitation, said functional interaction means between said primary circuit and said secondary circuit in particular comprising a so-called primary inductance (303) belonging to the primary circuit, and a so-called secondary inductance belonging to the secondary circuit
    said secondary circuit comprising said at least one electrically conductive element (440, 441), as well as electrical connection means, specific to connecting said at least one electrically conductive element (440, 441) to the functional interaction means.

12. The vehicle according to the preceding claim, **characterised in that** a first secondary circuit comprises said first detection element, first functional interaction means, and first electrical connection means, while a second secondary circuit comprises said second detection element, second functional interaction means, and second electrical connection means.

13. A method for monitoring the wear of a contact strip belonging to the system according to one of claims 1 to 7, this contact strip being mounted on a vehicle according to one of claims 8 to 12, in which method:

    - at least one occurrence is detected, for which said variation of the parameter representative of said detection circuit is situated outside of a predetermined range of variations,
    - at least one type of malfunctioning of the contact strip is identified, from this detection.

**Fig. 1**

**Fig. 2**

**Fig. 3a**

**Fig. 3b**

**Fig. 4**

**Fig. 5**

Fig. 6

Fig. 7

Fig. 8

Fig. 9

1400

1430

1440

1450

1440b

1440a

1460

1420

A

# Fig. 10

1430

1450

1440

1441

1440a
1441a

1440b
1441b

1420

# Fig. 11

**Fig. 12**

**Fig. 13**

**EP 3 691 929 B1**

## RÉFÉRENCES CITÉES DANS LA DESCRIPTION

**Documents brevets cités dans la description**

- GB 1374972 A
- GB 2107662 A
- FR 2663592
- US 5189903 A
- EP 0402666 A1
- EP 0394972 A2
- EP 1384972 A
- EP 0872374 A1
- WO 2014102508 A
- EP 0525595 A1
- WO 2006065985 A
- WO 2005044614 A
- JP H08107603 A
- WO 2017001799 A
- DE 8803377